# EUROPÄISCHE PATENTANMELDUNG

(11) **EP 3 009 338 A1**
(43) Veröffentlichungstag der Anmeldung: **20.04.2016**
(21) Anmeldenummer: 15188895.5
(22) Anmeldetag: 08.10.2015
(51) Int. Cl.: B62K 27/12, B62K 27/00

(54) **ANHÄNGER**

(30) Priorität: 13.10.2014 AT 5015914 U
(71) Anmelder: Hauser-Gracher, Helga, 9535 Schiefling am Wörthersee (AT)
(72) Erfinder: Hauser-Gracher, Helga, 9535 Schiefling am Wörthersee (AT)
(74) Vertreter: Wirnsberger, Gernot

(57) **Zusammenfassung**

Die Erfindung betrifft einen Anhänger (1) für ein Fahrzeug, insbesondere einen Fahrradanhänger, aufweisend einen Transportbehälter (2), einen Rahmen (3) mit einer Deichsel (4) sowie um Achsen drehbar mit dem Rahmen (3) verbundene Räder (5). Um ein komfortablen Bewegen von mit dem Anhänger (1) transportierten Gegenständen auch in Innenräumen zu ermöglichen, ist erfindungsgemäß vorgesehen, dass der bevorzugt etwa quaderförmige Transportbehälter (2) bodenseitige Roll- und/oder Gleitelemente (6) aufweist und lösbar mit dem Rahmen (3) verbunden ist.

## Beschreibung

Die Erfindung betrifft einen Anhänger für ein Fahrzeug, insbesondere einen Fahrradanhänger, aufweisend einen Transportbehälter, einen Rahmen mit einer Deichsel sowie um Achsen drehbar mit dem Rahmen verbundene Räder.

Aus dem Stand der Technik sind verschiedene derartige Anhänger wie Fahrradanhänger zum Transport von Gegenständen bekannt geworden. Bekannte Fahrradanhänger weisen einen stabilen Rahmen und straßentaugliche Räder auf, um Gegenstände auf einer Straße mit dem Fahrrad transportieren zu können. Nachteilig ist, dass solche Fahrradanhänger nicht für Innenräume geeignet sind, weswegen beispielsweise bei einem Einkauf erworbene Gegenstände von einem Abstellplatz des Fahrrades nicht bis in eine Wohnung oder in der Wohnung selbst gerollt werden können, sondern hier getragen werden müssen.

Hier setzt die Erfindung an. Aufgabe der Erfindung ist es, einen Anhänger der eingangs genannten Art anzugeben, mit welchem Gegenstände auch in einem Innenraum komfortabel transportiert werden können.

Diese Aufgabe wird durch einen Anhänger gemäß Anspruch 1 gelöst. Vorteilhafte Varianten eines erfindungsgemäßen Anhängers sind Gegenstand der Ansprüche 2 bis 10.

Mit einem erfindungsgemäßen Anhänger, welcher bevorzugt als Fahrradanhänger ausgebildet ist, wird insbesondere ein komfortables Transportieren von Gegenständen sowohl auf der Straße als auch in Innenräumen ermöglicht, weil der Transportbehälter vom Rahmen getrennt und aufgrund der bodenseitigen Roll- und/oder Gleitelemente gesondert vom Rahmen verfahren werden kann. Dadurch kann der für eine Benutzung des Anhängers auf der Straße stabil, schwer und sperrig ausgebildete Teil des Anhängers, der Rahmen samt den für eine Straßenbenutzung groß ausgebildeten Rädern, beim Fahrrad oder einem anderen Fahrzeug verbleiben, während die Gegenstände mittels des üblicherweise leichtgewichtig ausgebildeten Transportbehälters komfortabel bewegt werden können. Weiter wird somit auf einfache Weise ein Verschmutzen der Innenräume durch jene Räder vermieden, über welche der Anhänger auf der Straße bewegt wird. Somit können die mit dem Anhänger transportierten Gegenstände sauber, auf einfache Weise und auf kleinem Raum auch in Innenräumen komfortabel transportiert werden, ohne dass diese getragen werden müssen.

Bei einem erfindungsgemäß ausgebildeten Anhänger ergibt sich eine besonders hohe Stabilität bei gleichzeitig geringem Gewicht, da bei einem Transport von Gegenständen auf der Straße sowohl der Rahmen als auch der vorzugsweise aus einem Hohlkammerkunststoffmaterial bestehende Transportbehälter zur Stabilität beitragen. Dadurch können Anforderungen an moderne Fahrradanhänger, beispielsweise gemäß der Norm DIN EN 15918, auf einfache Weise mit einem als Fahrradanhänger ausgebildeten erfindungsgemäßen Anhänger erfüllt werden. Dies ermöglicht sowohl eine einfache Zulassung entsprechender Anhänger für einen Straßenverkehr als auch eine einfache Erlangung entsprechender Prüfzeichen wie beispielsweise eines GS-Zeichens. Es versteht sich, dass die erhöhte Stabilität des Anhängers auch dann erreicht wird, wenn der Anhänger nicht als Fahrradanhänger, sondern für eine Benützung mit anderen Fahrzeugen ausgebildet ist.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 einen erfindungsgemäßen Anhänger;
Fig. 2 und 3 Details eines erfindungsgemäßen Anhängers.

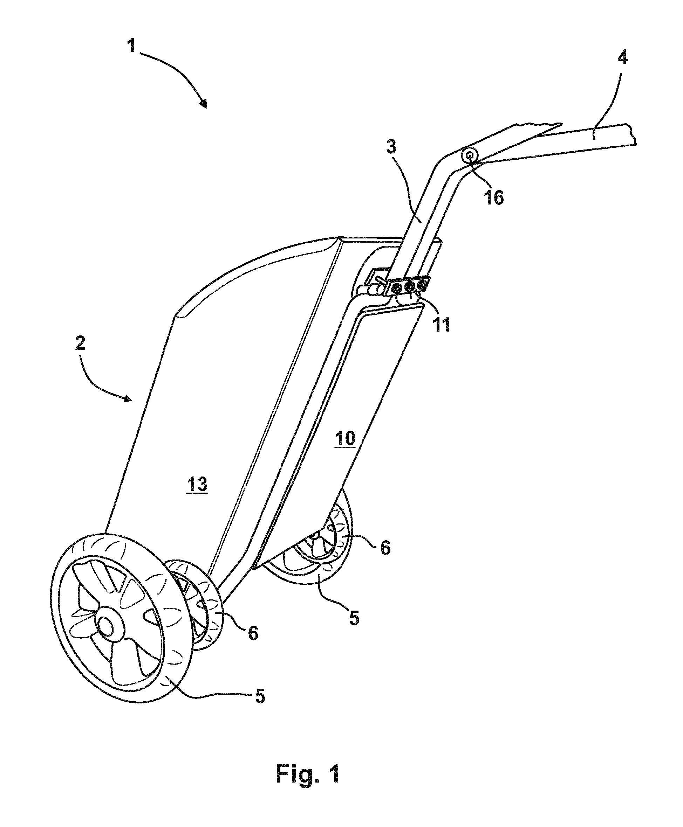

Fig. 1 zeigt einen erfindungsgemäßen Anhänger 1, welcher als Fahrradanhänger ausgebildet ist, in perspektivischer Darstellung. Der Anhänger 1 weist einen Rahmen 3 mit einer Deichsel 4 sowie Räder 5 auf, welche um Achsen drehbar mit dem Rahmen 3 verbunden sind. Weiter ist ein Transportbehälter 2 lösbar mit dem Rahmen 3 verbunden, welcher einen Boden 12 sowie an dem Boden 12 anschließende Seitenwände 13 und bodenseitige Rollelemente 6 aufweist. Der Rahmen 3, welcher im Ausführungsbeispiel im Wesentlichen aus Metallrohren ausgebildet ist, weist einen Auflagebereich 7 sowie einen bodenseitigen Absatz zur Aufnahme des Transportbehälters 2 auf. Der Absatz bildet eine Auflagefläche etwa senkrecht zum Auflagebereich 7, sodass der Transportbehälter 2 stabil mit dem Rahmen 3 verbunden werden kann. Dabei ragen die Rollelemente 6 des Transportbehälters 2 teilweise durch den Rahmen 3 und liegen am Rahmen 3 an, sodass der Transportbehälter 2 durch die anliegenden Rollelemente 6 in zwei Richtungen am Rahmen 3 fixiert ist. Zur Fixierung in einer dritten Raumrichtung ist in einem oberen Bereich des Rahmens 3 ein Mechanismus 11 vorgesehen, welcher durch eine im Transportbehälter 2 vorgesehene Griffausnehmung 14 ragt. Dadurch ist der üblicherweise im Wesentlichen aus einem Hohlkammerkunststoffmaterial bestehende Transportbehälter 2 lösbar am Rahmen 3 fixiert. Wie ersichtlich sind die Rollelemente 6 des Transportbehälters 2 kleiner ausgebildet als die Räder 5 des Rahmens 3, sodass sowohl eine Größe als auch ein Gewicht eines zu bewegenden Gegenstandes bei Trennung des Transportbehälters 2 vom Rahmen 3 reduziert werden. Weiter ist der Rahmen 3 derart ausgebildet, dass die Rollelemente 6 bei einer Benutzung an einem Fahrrad nicht die Straße berühren, sodass eine Verschmutzung eines Innenraumes durch die Rollelemente 6 vermieden ist.

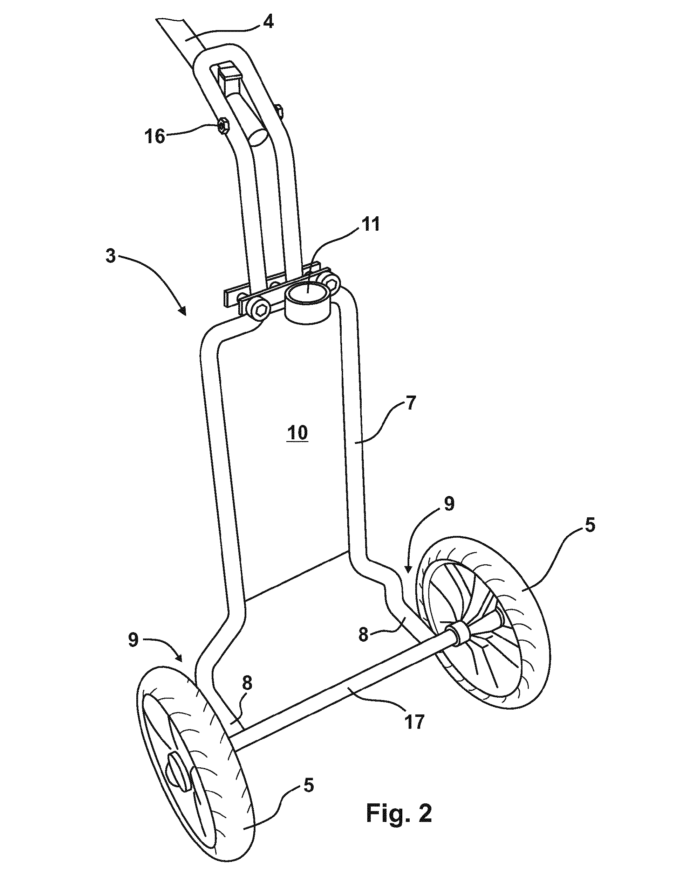

Fig. 2 zeigt einen erfindungsgemäßen, als Fahrradanhänger ausgebildeten Anhänger 1 ohne Transportbehälter 2. Ersichtlich ist, dass der Rahmen 3 ein Achselement 17 aufweist, welches die Räder 5 verbindet, wobei das Achselement 17 gleichzeitig als Teil des Absatzes zur Aufnahme des Transportbehälters 2 dient. Weiter ist im Rahmen 3 ein aus einem Hohlkammerkunststoffmaterial bestehendes flächiges Element 10 vorgesehen, welches einerseits den Rahmen 3 verstärkt und zur Auflage des Transportbehälters 2 im Bereich des Auflagebereiches 7 genutzt werden kann. Andererseits kann das flächige Element 10 bedruckt und als Werbeträger genutzt werden.

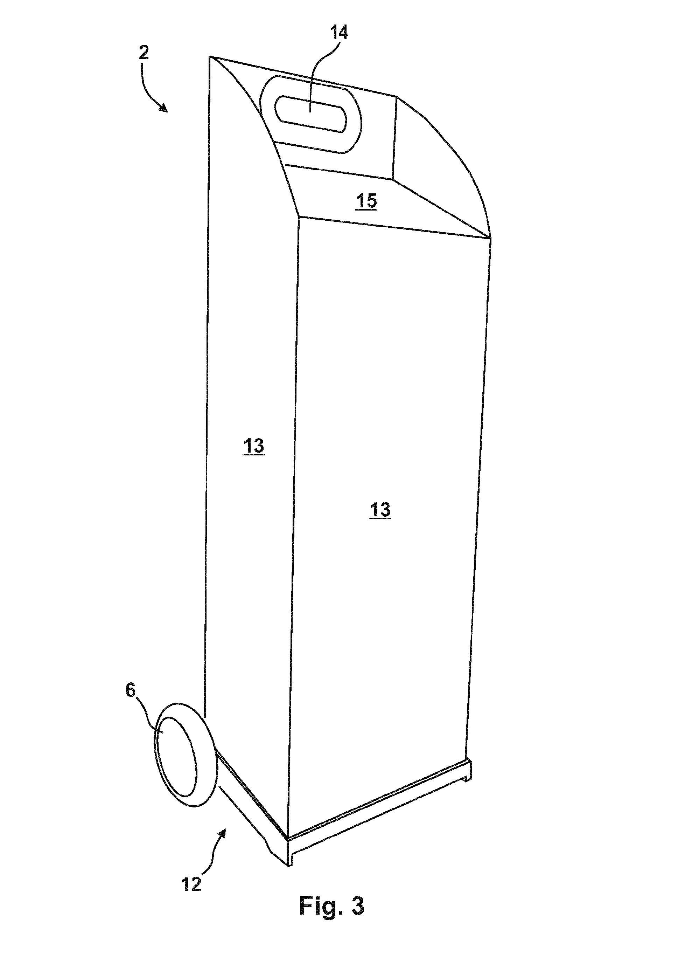

Der Absatz, welcher zwei mit dem Achselement 17 verbundene und etwa senkrecht auf das flächige Element 10 angeordnete Rohrenden 8 des Rahmens 3 aufweist, ist derart ausgebildet, dass Rollelemente 6 des Transportbehälters 2 in Ausnehmungen 9 zwischen den Rohrenden 8, dem Achselement 17 und den Rädern 5 durch den Rahmen 3 ragen können, sodass der Transportbehälter 2 zwischen den Rädern 5 und dem Absatz in zwei Richtungen formschlüssig fixiert ist. Hierzu sind die senkrecht auf das flächige Element 10 positionierten Rohrenden 8 mit einem zu einer Breite der Rollelemente 6 korrespondierenden Abstand zu den Rädern 5 angeordnet. Die Breite einer Ausnehmung 9 entspricht somit dem Abstand der Rohrenden 8 zu den Rädern 5. Oberhalb des Mechanismus 11 ist eine Deichsel 4 am Rahmen 3 vorgesehen, welche in der Regel eine Kupplung zur Verbindung des Anhängers 1 mit einem Fahrrad, beispielsweise an einer Sattelstütze oder einer Hinterradachsbefestigung aufweist. Um ein platzsparendes Lagern des Transportbehälters 2 zu ermöglichen, kann die Deichsel 4 auch mittels eines Gelenkes 16 schwenkbar mit dem Auflagebereich 7 verbunden sein. Fig. 3 zeigt einen Transportbehälter 2 für einen erfindungsgemäßen Anhänger 1. Der Transportbehälter 2 ist im Wesentlichen quaderförmig ausgebildet und weist im Bereich einer bodenseitigen Kante Rollelemente 6 für ein Verfahren des Transportbehälters 2 in einem Innenraum auf. Kopfseitig ist in einer rückseitigen Seitenwand 13 des Transportbehälters 2 eine Griffausnehmung 14 vorgesehen, um den Transportbehälter 2 einerseits manuell bewegen zu können. Andererseits kann der Transportbehälter 2 durch die Griffausnehmung 14 auch auf einfache Weise mit dem Rahmen 3 durch den Mechanismus 11 formschlüssig fixiert werden. Der Transportbehälter 2 kann durch eine kopfseitige Beladeöffnung beladen werden, welche wie dargestellt durch ein Deckelement 15 abgeschlossen werden kann.

## Patentansprüche

1. Anhänger (1) für ein Fahrzeug, insbesondere Fahrradanhänger, aufweisend einen Transportbehälter (2), einen Rahmen (3) mit einer Deichsel (4) sowie um Achsen drehbar mit dem Rahmen (3) verbundene Räder (5), **dadurch gekennzeichnet, dass** der bevorzugt etwa quaderförmige Transportbehälter (2) bodenseitige Roll- und/oder Gleitelemente (6) aufweist und lösbar mit dem Rahmen (3) verbunden ist.

2. Anhänger (1) nach Anspruch 1, **dadurch gekennzeichnet, dass** der Transportbehälter (2) derart mit dem Rahmen (3) verbunden ist, dass die Roll- und/oder Gleitelemente (6) bei Benutzung des Anhängers (1) von einer Straße beabstandet sind.

3. Anhänger (1) nach Anspruch 1 oder 2, **dadurch gekennzeichnet, dass** der Rahmen (3) einen Auflagebereich (7) sowie einen vorstehenden Absatz zur Aufnahme des Transportbehälters (2) aufweist.

4. Anhänger (1) nach einem der Ansprüche 1 bis 3, **dadurch gekennzeichnet, dass** ein Schwerpunkt des Transportbehälters (2) zwischen Achsen der Räder (5) und dem Auflagebereich (7) angeordnet ist.

5. Anhänger (1) nach einem der Ansprüche 1 bis 4, **dadurch gekennzeichnet, dass** im Rahmen (3) Ausnehmungen (9) zur Aufnahme der Roll- und/oder Gleitelemente (6) des Transportbehälters (2) vorgesehen sind.

6. Anhänger (1) nach Anspruch 5, **dadurch gekennzeichnet, dass** die Roll- und/oder Gleitelemente (6) teilweise durch den Rahmen (3) ragen, wobei der Transportbehälter (2) am Rahmen (3) durch die Roll- und/oder Gleitelemente (6) in zwei Richtungen formschlüssig fixiert ist.

7. Anhänger (1) nach einem der Ansprüche 1 bis 6, **dadurch gekennzeichnet, dass** der Rahmen (3) ein den Rahmen (3) verstärkendes, flächiges Element (10) aufweist, welches zwischen den Rädern (5) und der Deichsel (4) angeordnet und etwa parallel zu einer rückseitigen Seitenwand (13) des Transportbehälters (2) ausgerichtet ist, wobei das flächige Element (10) vorzugsweise aus einem Hohlkammerkunststoffmaterial besteht.

8. Anhänger (1) nach einem der Ansprüche 1 bis 7, **dadurch gekennzeichnet, dass** der Rahmen (3) einen Mechanismus (11) zur lösbaren Fixierung des Transportbehälters (2) aufweist, durch welchen der Transportbehälter (2) insbesondere an einer kopfseitigen Griffausnehmung (14) des Transportbehälters (2) fixiert ist.

9. Anhänger (1) nach einem der Ansprüche 1 bis 8, **dadurch gekennzeichnet, dass** der Transportbehälter (2) im Wesentlichen aus einem Hohlkammerkunststoffmaterial ausgebildet ist.

10. Anhänger (1) nach einem der Ansprüche 1 bis 9, **dadurch gekennzeichnet, dass** die Roll- und/oder Gleitelemente (6) im Bereich einer bodenseitigen Kante des Transportbehälters (2) angeordnet sind.
